# EUROPÄISCHE PATENTSCHRIFT

(11) **EP 2 420 712 B1**
(45) Veröffentlichungstag und Bekanntmachung des Hinweises auf die Patenterteilung: **14.12.2016**
(21) Anmeldenummer: 11165876.1
(22) Anmeldetag: 12.05.2011
(51) Int. Cl.: F16K 39/02

(54) **Stellgerät zur Steuerung eines Fluidstroms**
Positioning device for regulating a fluid flow
Appareil de réglage pour la commande d'un flux de fluide

(30) Priorität: 16.08.2010 DE 102010037011
(43) Veröffentlichungstag der Anmeldung: 22.02.2012
(73) Patentinhaber: Samson AG, 60314 Frankfurt (DE)
(72) Erfinder: Nebel, Eugen, 61130, Nidderau-Windecken (DE)
(74) Vertreter: Puschmann Borchert Bardehle Patentanwälte Partnerschaft mbB

(56) Entgegenhaltungen:
- US-A1- 2002 162 591
- US-A1- 2004 099 832
- US-A1- 2009 183 510

## Beschreibung

Die Erfindung betrifft ein Stellgerät zur Steuerung eines Fluidstroms gemäß der im Oberbegriff des Anspruchs 1 angegebenen Art.

Stellgeräte werden in der Prozesstechnik zur Drosselung oder auch zur Absperrung von Fluidströmen eingesetzt. Die Stellgeräte weisen dabei ein Ventil auf durch das der Fluidstrom fließt. Das Ventil des Stellgeräts wirkt mit einem Stellantrieb zusammen, der einen im Ventil befindlichen Drosselkörper bewegt. Das Ventil weist einen Zulauf und einen Ablauf auf. Zwischen Zu- und Ablauf liegt der Drosselkörper, über den der Fluidstrom eingestellt wird. Im Falle von Armaturen für hohe Durchflüsse oder für hohen Differenzdruck greifen große Kräfte einseitig am Drosselkörper in Strömungsrichtung an. Daher müssen hohe Stellkräfte aufgebracht werden, um den am Drosselkörper angreifenden Kräften entgegen zu wirken.

Zur Druckentlastung wird zwischen dem Drosselkörper ablaufseitig eine Kammer zwischen Drosselkörper und Ventilgehäuse ausgebildet. Dabei wird oberhalb der Anströmfläche des Drosselkörpers durch den Drosselkörper zusammen mit einem Abschluss, der mit dem Ventilgehäuse verbunden ist, eine Kammer gebildet. Diese Kammer ist durch einen Kanal mit der zulaufseitigen Seite des Drosselkörpers verbunden, die vorzugsweise die druckbeaufschlagte Seite des Drosselkörpers ist. Durch den Kanal wird erreicht, dass auf beiden Seiten des Drosselkörpers ein annähernd gleicher Druck anliegt, wodurch die für das Bewegen des Drosselkörpers erforderliche Stellkraft verringert wird.

Nach dem Stand der Technik ist die Kammer zwischen dem mit dem Ventilgehäuse verbundenen Kammerabschluss und dem Drosselkörper abgedichtet. Dadurch wird eine Beeinträchtigung des gesteuerten Fluidstroms durch Leckageströme durch den Drosselkörper hindurch verhindert.

Diese Dichtung führt allerdings zu erhöhter Reibung bei einer Bewegung des Drosselkörpers gegenüber dem Kammerabschluss ausgesetzt, was für die Betätigung des Drosselkörpers wiederum zu einer erhöhten notwendigen Betätigungskraft führt. Zudem ist vor allem im Falle von partikelbehafteter Medien im Bereich der Dichtung mit einem hohen Verschleiß zu rechnen.

Zur Vermeidung dieser Nachteile sind Doppelkegelsysteme bekannt, die jedoch den Nachteil eines sehr hohen konstruktiven Aufwandes bei der Fertigung aufweisen. Für diese Ausführung müssen beispielsweise zwei Ventilkegel in ein Ventil integriert werden, was eine sehr komplexe Gehäusegeometrie nach sich zieht. Zudem gestaltet sich die Regelung eines solchen Systems deutlich komplexer, da die erforderliche rückseitige Anströmung eines Kegels zu Instabilitäten führt.

Ein Stellgerät nach dem Oberbegriff von Anspruch 1 wird aus der US 2009/0183510 A1 bekannt.

Der vorliegenden Erfindung liegt die Aufgabe zu Grunde, ein Stellgerät zur Steuerung eines Fluidstroms umfassend einen Drosselkörper mit geringer Reibung und geringem Verschleiß zu realisieren.

Die Aufgabe wird durch die kennzeichnenden Merkmale des Anspruchs 1 in Verbindung mit seinen Oberbegriffsmerkmalen gelöst.

Nach der Erfindung umfasst ein Stellgerät mit einer Druckentlastung zur Steuerung eines Fluidstroms ein Ventilgehäuse, einen Ventilkörper, und einen Ventilsitz. Das Ventilgehäuse weist einen Ablauf und einen Zulauf auf. Zwischen Zu- und Ablauf liegt der Ventilsitz, an dem ein Drosselkörper in einer Schließstellung anliegt. Abhängig von der Position des Drosselkörpers ergibt sich ein entsprechendender Fluidstrom durch das Ventil. Der Drosselkörper weist somit eine Zulauf- und eine Ablaufseite auf. Zudem ist abgewandt von der Zulaufseite des Drosselkörpers eine Kammer zur Druckentlastung des Stellkörpers vorgesehen. Die Kammer wird durch drosselseitige und ventilgehäuseseitige Begrenzungswände gebildet. Die drosselseitigen und die ventilseitigen Kammerwände sind beweglich gegeneinander gelagert. Das Volumen der druckentlastenden Kammer ändert sich abhängig von der Position des Drosselkörpers. Der Drosselkörper weist zulaufseitig eine Aussparung auf, insbesondere in Form eines Kanals, welche den Zulauf des zu steuernden Fluids in die druckentlastende Kammer ermöglicht. Erfindungsgemäß ist zwischen der gehäuseseitigen Kammerbegrenzung, einem Kammerabschluss, und der drosselseitigen Kammerbegrenzung eine Dichtung vorgesehen, die derart ausgebildet ist, dass diese lediglich in Schließstellung des Drosselkörpers die druckentlastende Kammer ablaufseitig abdichtet. Ein Drosselkörper ist in Schließstellung, wenn dieser den Fluss des zu steuernden Fluids durch das Ventil unterbindet. Bei den weiteren geöffneten Stellungen des Drosselkörpers ist ein definierter Durchtritt des Fluids aus der druckentlastenden Kammer in den ablaufseitigen Teil des Ventils eingestellt.

Dies ist besonders vorteilhaft, da in der Offenstellung oder einer teilweise geöffneten Stellung ein definierter Durchtritt des Fluids aus der druckentlastenden Kammer, also eine definierte Leckage durch den Drosselkörper, überraschender Weise toleriert werden kann. Dadurch können die Dichtungsanforderungen derart reduziert werden, dass lediglich in einem statischen Betriebsfall, also in Schließstellung, eine Abdichtung der druckentlastenden Kammer notwendig ist. Entsprechend können die Dichtungen für den Betriebsfall der Offenstellungen reduziert werden, wodurch während der Verstellung des Ventils keine erhöhten Reibungskräfte auftreten, was den Verschleiß und den notwendigen Kraftaufwand für die Verstellung deutlich reduziert.

In einer ersten vorteilhaften Ausführungsform, kann grundsätzlich ein definierter Spalt zwischen ventilgehäuseseitiger und drosselkörperseitiger Kammerwand vorgesehen. Dies hat den Vorteil, dass ein insbesondere ringförmiger Spalt keine Reibung verursacht und entsprechend auch nicht verschleißbehaftet ist. Der Spalt ist derart dimensioniert, dass die Durchflussrate zur Ablaufseite erheblich geringer ist als der Kammerzufluss durch den Kanal im Drosselkörper. In Schließstellung kann die ventilgehäuseseitige Wand gegenüber der drosselkörperseitigen Wand beispielsweise durch einen Sitz abgedichtet.

Gemäß einer weiteren Ausführungsform kann ein Sitzring vorgesehen sein, der an dem Drosselkörper angebracht ist und zusammen mit dem Drosselkörper den ventilgehäuseseitigen Kammerabschluss in axialer Richtung umgreift. Dies führt dazu, dass sobald der Drosselkörper in Schließstellung verfahren wird, der Sitzring von außen auf den ventilgehäuseseitigen Kammerabschluss drückt und somit die druckentlastende Kammer abdichtet.

Abhängig von dem Zu- und Ablaufverhältnis der druckentlastenden Kammer, welches durch den zulaufseitigen Kanal im Drosselkörper und dem definierten Spalt vorgegeben ist, kann sich vorteilhafter Weise ein Druck in der Entlastungskammer einstellen, der zwischen 5% und 7% geringer ist als der Druck der zulaufseitig des Ventils anliegt. Dieses Druckverhältnis ergibt sich in der Offenstellung des Drosselkörpers.

In einer weiter vorteilhaften Ausgestaltung kann die Durchtrittsrate erheblich kleiner als das maximale Stellverhältnis, also die Größe des regelbaren Bereiches im Verhältnis zum maximalen Durchfluss, sein. Vorzugsweise ist der Durchtritt kleiner als 2% des maximalen Durchflusses.

Gemäß der Erfindung ist die druckentlastende Kammer derart ausgebildet, dass drosselkörperseitig eine zylinderförmige Wand vorgesehen ist. Diese zylinderförmige Wand wird in einer Art Deckel durch einen ventilgehäuseseitigen Abschluss begrenzt. Zwischen der drosselkörperseitigen Zylinderwand und der ventilgehäuseseitigen Begrenzung, welche einen kreisförmigen Querschnitt aufweist, ist ein ringförmiger Spalt vorgesehen. In axialer Richtung umgreift die zylinderförmige Wand den ventilgehäuseseitigen Deckel. Dies hat zur Folge, dass bei geschlossenem Ventil in axialer Richtung Drosselkörpergehäuse und Ventilgehäuse aufeinander gedrückt werden und die druckentlastende Kammer abdichten. Wird hingegen der Drosselkörper in Öffnungsstellung bewegt, ergibt sich aufgrund der axialen Verschiebung vom Drosselkörper zum Ventilgehäuse ein Spalt zwischen dem ventilgehäuseseitigen Deckel und der drosselkörperseitigen axialen Umgreifung. Da zusätzlich in radialer Richtung ein Spalt zwischen dem Drosselkörper und dem Deckel vorgesehen ist, kann nun in einer Öffnungsstellung Fluid vom Zulauf des Ventils zum Ablauf des Ventils durch den Drosselkörper hindurchtreten. In Schließstellung des Drosselkörpers ist durch die vorbeschriebene Ausführungsform der Durchtritt des Fluids unterbunden. Dadurch wird ein Fluidstrom durch das Ventil vollständig abgeschlossen. In der Öffnungsstellung kann nach dieser Ausführungsform der Drosselkörper druckentlastet bewegt werden und weist aufgrund des Spalts zwischen Ventilgehäuse und Drosselkörperwand keine Reibung und somit keinen Verschleiß auf. Der Durchtritt durch den Drosselkörper kann in Öffnungsstellung vernachlässigt werden. Diese Ausführungsform stellt eine besonders einfache Umsetzung eines erfindungsgemäßen Stellgeräts dar.

In einer weiteren Ausführungsform kann der Sitz des Drosselkörpers mit einer flexiblen Dichtkante versehen sein. Dies ermöglicht neben den zuvor beschriebenen Vorteilen zusätzlich den Ausgleich von Fertigungstoleranzen des Drosselkörpers.

In einer besonders vorteilhaften Ausführungsform kann die drosselkörperseitige Kammerwand zylinderförmig ausgebildet sein. Die ventilgehäuseseitige Begrenzung der Kammer kann durch einen Kegel, welcher an seinen Enden abgeflacht ist, gebildet werden. Die drosselkörperseitige Zylinderwand umgreift die abgeflachten Seiten des Kegels in axialer Richtung. Die kegelförmige Ausbildung der ventilgehäuseseitigen Abdeckung hat den Vorteil, dass ein am Drosselkörper angebrachter Sitzring auch radial federnd gegen die seitlichen Schrägen des kegelförmigen Abschlusses drückt, wodurch Fertigungstoleranzen ausgeglichen werden können, und eine zuverlässige Abdichtung der Kammer in Schließstellung des Ventils gewährleistet ist.

In geschlossener Stellung wird somit die erforderliche Abdichtung der druckentlastenden Kammer durch die Ausbildung eines entsprechenden Sitzrings erreicht. Der Sitzring kann insbesondere drosselkörperseitig angebracht sein.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugzeichen verwendeten Begriffe und zugeordneten Bezugzeichen verwendet. In der Zeichnung bedeutet:
- Fig. 1: eine Schnittansicht eines erfindungsgemäßen Ventilgehäuses, und
- Fig. 2: eine Detailansicht A des Drosselkörperdichtung aus Fig. 1.

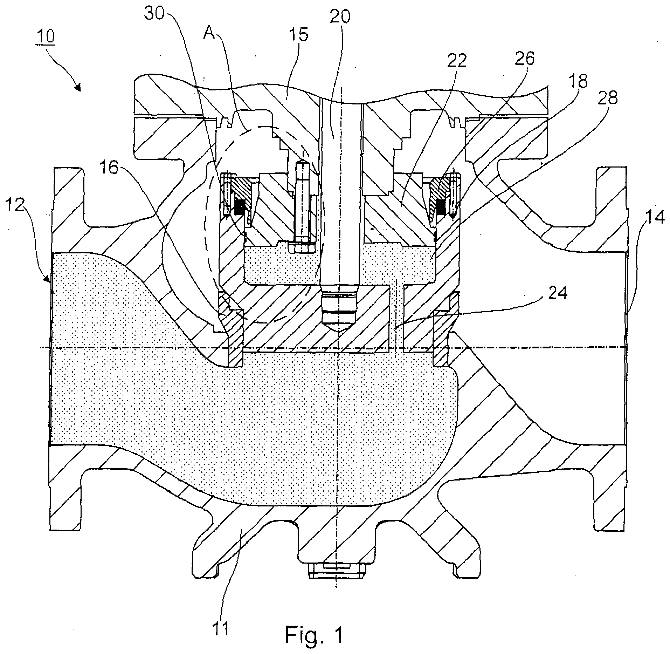

Fig. 1 zeigt ein Ventil 10 mit einer Zulaufseite 12 und einer Ablaufseite 14. Das Ventil 10 ist in diesem Fall zulaufseitig mit einem Fluidstrom beaufschlagt. Zulauf- und Ablaufseite sind über einen Ventilsitz 16 verbunden. Dieser Ventilsitz ist durch einen Drosselkörper 18 abschließbar. Zudem ist der Drosselkörper 18 über einer Ventilstange 20 mit einem nicht gezeigten Antrieb verbunden. Über eine axiale Bewegung der Ventilstange 20 wird der Volumenstrom durch das Ventil 10 eingestellt. Um ein druckentlastetes Verfahren des Drosselkörpers 18 zu gewährleisten, ist die Ablaufseite 14 des Drosselkörpers 18 hohlzylindrisch ausgestaltet. In diesem Hohlzylinder greift ein kegelförmiger Abschluss 22 ein. Zwischen dem kegelförmigen Abschluss 22 und dem Drosselkörper 18 entsteht auf diese Weise eine druckentlastende Kammer 28. Die Druckentlastung wird dadurch erreicht, dass in der Anströmfläche des Drosselkörpers 18 ein Kanal 24 eingebracht ist, der den Zustrom des Fluids in die druckentlastende Kammer 28 erlaubt. Dadurch herrschen sowohl zu- als auch ablaufseitig des Drosselkörpers 18 nahezu gleiche Druckverhältnisse, wodurch ein druckentlastetes Verfahren des Drosselkörpers 18 ermöglicht wird.

An die hohlzylinderförmige Drosselkörperwand 18 schließt ein Sitzring 26 an, der im Durchmesser kleiner ist, als der Innendurchmesser des Hohlzylinders. Dieser Sitzring 26 begrenzt somit den Verfahrweg des Drosselkörpers 18 in Richtung des Ventilsitzes 16. Der Verfahrweg des Drosselkörpers 18 ist jedoch so ausgelegt, dass genau wenn dieser an dem Ventilsitz 16 anliegt auch gleichzeitig der Sitzring 26 den ablaufseitigen Teil des Ventils 10 gegenüber der Druckkammer 28 abdichtet. In radialer Ausdehnung ist zwischen der Zylinderwand des Drosselkörpers 18 und dem kegelförmigen Abschluss 22 ein Spalt vorgesehen. Durch diesen ist ein definierter Durchtritt in einer nicht geschlossenen Stellung des Drosselkörpers 18 möglich. Dadurch wird die Reibung signifikant reduziert, wohingegen sich das durchtretende Fluid nicht als störend für den Prozess erweist.

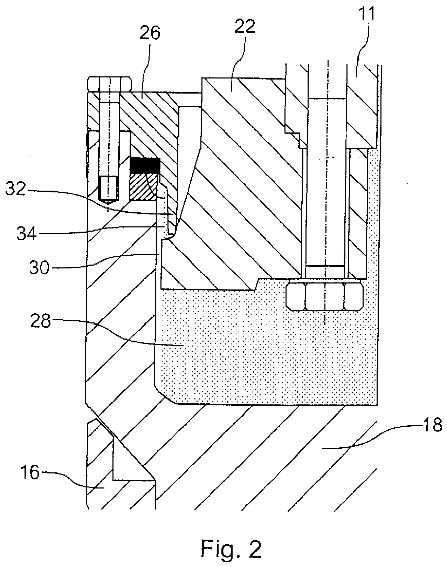

Das Zusammenwirken des am Drosselkörper 18 angebrachten Sitzrings 26 mit der Drosselkörperwand 18 sowie dem ventilgehäuseseitigen Abschluss 22 wird im Detail in Fig. 2 näher erläutert.

Fig. 2 zeigt einen Ausschnitt des Ventils 10, wie in Fig. 1 dargestellt. Besonders herausgehoben ist in dieser Darstellung die Funktionsweise der Abdichtung der druckentlastenden Kammer 28 gegenüber der Ablaufseite 14 des Ventils 10 in Schließstellung. Besonders deutlich wird in dieser Darstellung, dass zwischen der zylinderförmigen Drosselkörperwand 18 und dem kegelförmigen Kammerabschluss 22, der mit dem Ventilgehäuse 26 über eine Schraube 36 verbunden ist, ein Spalt 30, ausgebildet ist.

Durch diesen Spalt 30 tritt grundsätzlich ein in der druckentlastenden Kammer 28 befindliches Fluid, welches aber in Schließstellung des Drosselkörpers 18 durch das Aufeinanderliegen des Sitzrings 26 und des kegelförmigen Kammerabschlusses 22 verhindert wird.

Besonders hervorzuheben ist an dieser Stelle, dass der Sitzring 26 ein Ringteil 32 mit einer Auflagerkante aufweist, die dafür sorgt, dass Sitzring 26 und kegelförmiger Kammerabschluss 22 nicht nur in axialer Richtung dichtend aufeinander liegen, sondern aufgrund einer Federwirkung auch in radialer Richtung gegenüber dem kegelförmigen Kammerabschluss 22 eine Dichtwirkung erreicht wird. Aufgrund dieser radialen Dichtwirkung können Toleranzen in der Fertigung besser ausgeglichen werden. Dies wird durch den in seinen Enden federnd ausgebildeten Ringteil 32 erreicht.

Durch den Sitzring 26, welcher auf den Drosselkörper 18 aufgeschraubt ist, kann so bei axialer Bewegung in Richtung des Ventilsitzes 16 der Sitzring 26, insbesondere sein federnder Ringteil 32 entlang der kegelförmigen Seitenfläche des ventilgehäuseseitigen Abschlusses 22 gleiten. Bewegt sich hingegen der Drosselkörper 18 in axialer Richtung weg vom Ventilsitz 16 wird der Weg über den Spalt 30 auf die Ablaufseite des Ventils frei gegeben. Das zu steuernde Fluid gelangt demzufolge nicht nur noch über den Ventilsitz 16 von der Zulauf-12 auf die Ablaufseite 14 sondern auch über die druckentlastende Kammer 28 sozusagen durch den Drosselkörper 18 hindurch auf die Ablaufseite 14.

Bei dem erfindungsgemäßen Stellgerät, können druckentlastete Ventile nahezu verschleißfrei und kraftarm betrieben werden.

### Bezugszeichenliste

- 10: Ventil
- 11: Ventilgehäuse
- 12: Zulaufseite
- 14: Ablaufseite
- 15: Ventiloberteil
- 16: Ventilsitz
- 18: Drosselkörper
- 20: Ventilstange
- 22: Abschluss
- 24: Kanal
- 26: Sitzring
- 28: druckentlastende Kammer
- 30: Spalt
- 32: Ringteil
- 36: Schraube

## Patentansprüche

1. Stellgerät (10) zur Steuerung eines Fluidstroms umfassend ein Ventilgehäuse (11), einen Drosselkörper (18), und einen Ventilsitz (16), wobei der Drosselkörper (18) derart ausgestaltet ist, dass der Drosselkörper (18) zusammen mit einem Abschluss (22), der mit dem Ventilgehäuse (12) in Verbindung steht, eine druckentlastende Kammer (28) ausbildet, wodurch eine Relativbewegung zwischen Drosselkörper (18) und dem Kammerabschluss (22) mit der Stellbewegung ergibt, dass sich das Volumen der druckentlastenden Kammer (28) abhängig von der Bewegungsrichtung verändert, und der Drosselkörper (18) eine Aussparung (24) aufweist, welche den Zulauf des zu steuernden Fluids in die druckentlastende Kammer (28) ermöglicht, wobei die Dichtung (26, 30) zwischen Drosselkörper (18) und dem Ventilgehäuse (11) derart ausgebildet ist, dass in der Schließstellung, wenn der Drosselkörper (18) an dem Ventilsitz (16) anliegt, die Dichtung (26, 30) abdichtet und bei einem nicht anliegenden Drosselkörper (18) die Dichtung (26, 30) einen definierten Durchtritt des Fluids aus der druckentlastenden Kammer (28) zulässt, **dadurch gekennzeichnet, dass** der Durchtritt derart dimensioniert ist, dass die Durchflussrate zur Ablaufseite erheblich geringer ist als der Zulauf in die druckentlastende Kammer (28).

2. Stellgerät nach Anspruch 1, **dadurch gekennzeichnet, dass** die Dichtung einen Sitzring (26) umfasst, der an dem Drosselkörper (18) angebracht ist, und welcher den Kammerabschluss (22), der mit dem Ventilgehäuse (11) verbunden ist, in axialer Richtung umgreift.

3. Stellgerät nach den Ansprüchen 1 und 2, **dadurch gekennzeichnet, dass** der Durchtritt des Fluids durch die druckentlastende Kammer (28) als Spalt, insbesondere als ringförmiger Spalt (30) zwischen Drosselkörper (18) und Kammerabschluss (22) ausgebildet ist.

4. Stellgerät nach einem der vorangehenden Ansprüche, **dadurch gekennzeichnet, dass** die Ausnehmung (24) in der dem Ventilsitz (16) zugewandten Seite des Drosselkörpers (18) eingebracht.

5. Stellgerät nach einem der vorangehenden Ansprüche, **dadurch gekennzeichnet, dass** der Durchtritt kleiner als das maximale Stellverhältnis, insbesondere kleiner als 2 % des maximalen Durchflusses ist.

6. Stellgerät nach einem der vorangehenden Ansprüche, **dadurch gekennzeichnet, dass** der ventilgehäuseseitige Kammerabschluss (22) kegelförmig ausgebildet ist.

7. Stellgerät nach einem der vorangehenden Ansprüche, **dadurch gekennzeichnet, dass** die als Sitzring (26) ausgebildete Dichtung eine flexible Dichtkante (32) umfasst.

## Claims

1. Positioning device (10) for regulating a fluid flow, comprising a valve housing (11), a flow restrictor (18) and a valve seat (16), said flow restrictor (18) being designed such that the flow restrictor (18) forms a pressure-relief chamber (28) together with an end portion (22) which is in connection with the valve housing (12), such that a relative motion between the flow restrictor (18) and the chamber end portion (22) together with the positioning motion will result in a change in the volume of the pressure-relief chamber (28) as a function of the direction of motion, and the flow restrictor (18) includes an opening (24) which allows the fluid to be controlled to flow into the pressure-relief chamber (28), wherein the seal (26, 30) is formed between the flow restrictor (18) and the valve housing (11) in such a way that in the closed position, in which the flow restrictor (18) sits on the valve seat (16), said seal (26, 30) will exert a sealing effect, and when the flow restrictor (18) does not sit on the valve seat (16), said seal (26, 30) will allow a defined flow of the fluid from the pressure-relief chamber (28),
**characterized in that** said passage is dimensioned such that the flow rate to the outlet side is considerably lower than the inflow into the pressure-relief chamber (28).

2. Positioning device according to claim 1, **characterized in that** said seal comprises a seat ring (26) which is mounted on the flow restrictor (18) and which surrounds the chamber end portion (22), which is connected to the valve housing (11), in an axial direction.

3. Positioning device according to claims 1 and 2, **characterized in that** the fluid passage through the pressure-relief chamber (28) is designed in the form of a gap, in a particular an annular gap (30), between the flow restrictor (18) and the chamber end portion (22).

4. Positioning device according to one of the preceding claims, **characterized in that** the opening (24) is provided in the side of the flow restrictor (18) which faces the valve seat (16).

5. Positioning device according to one of the preceding claims, **characterized in that** said passage is smaller than the maximum regulation ratio, more specifically said passage is smaller than 2% of the maximum flow.

6. Positioning device according to one of the preceding claims, **characterized in that** the chamber end portion (22) provided on the side of the valve housing is of conical shape.

7. Positioning device according to one of the preceding claims, **characterized in that** the seal provided in the form of a seat ring (26) comprises a flexible sealing edge (32).

## Revendications

1. Un actionneur (10) pour maîtriser un écoulement d'un fluide, comprenant un boîtier de soupape (11), un corps d'étranglement (18) et un siège de soupape (16), dans lequel le corps d'étranglement (18) est conçu d'une manière telle que le corps d'étranglement (18), conjointement avec une terminaison (22) reliée au boîtier de soupape (12), forme une chambre de soulagement de pression (28), par quoi un mouvement relatif entre le corps d'étranglement (18) et la terminaison de la chambre (22) donne lieu à un changement de volume de la chambre de soulagement de pression (28), ce qui dépend de la direction dudit mouvement, et le corps d'étranglement (18) comprend une cavité (24) qui permet l'afflux du fluide à diriger vers la chambre de soulagement de pression (28),
dans lequel
le joint (26, 30) entre le corps d'étranglement (18) et le boîtier de la soupape (11) est conçu d'une manière telle que dans la position de fermeture, lorsque le corps d'étranglement (18) repose contre le siège de soupape (16), le joint (26, 30) scelle, et lorsque le corps d'étranglement (18) ne présente pas de repos le joint (26, 30) permet un passage délimité du fluide à partir de la chambre de soulagement de pression (28),
**caractérisé en ce que**
le passage possède une dimension telle que le taux de débit vers le côté de drainage est considérablement inférieur que l'afflux vers la chambre de soulagement de pression (28).

2. L'actionneur selon la revendication 1, **caractérisé en ce que** le joint comprend une bague de siège (26) montée sur le corps d'étranglement (18) et qui s'engage autour de la terminaison de la chambre (22) reliée au boîtier de la soupape (11) dans une direction axiale.

3. L'actionneur selon les revendications 1 et 2, **caractérisé en ce que** le passage du fluide à travers la chambre de soulagement de pression (28) est conçu comme un espace, notamment comme un espace annulaire (30) entre le corps d'étranglement (18) et la terminaison de la chambre (22).

4. L'actionneur selon une des revendications précédentes, **caractérisé en ce que** la cavité (24) est implanté sur le côté du corps d'étranglement (18) face au siège de la soupape (16).

5. L'actionneur selon une des revendications précédentes, **caractérisé en ce que** le passage est inférieur au taux de réglage maximal, notamment inférieur à 2% du débit maximal.

6. L'actionneur selon une des revendications précédentes, **caractérisé en ce que** la terminaison de la chambre (22) sur le côté du boîtier de la soupape a une forme conique.

7. L'actionneur selon une des revendications précédentes, **caractérisé en ce que** le joint conçu comme bague de siège (26) comprend un bord étanche résilient (32).
